Europäisches Patentamt

European Patent Office

Office européen des brevets

(19)

(11) EP 0 575 840 B1

(12) EUROPÄISCHE PATENTSCHRIFT

(45) Veröffentlichungstag und Bekanntmachung des Hinweises auf die Patenterteilung:
06.11.1996 Patentblatt 1996/45

(51) Int Cl.$^6$: C08F 10/02, C08F 4/654

(21) Anmeldenummer: 93109408.0

(22) Anmeldetag: 11.06.1993

(54) **Verfahren zur Herstellung eines Katalysatorsystems für die Polymerisation und Copolymerisation von Ethylen zu ultrahochmolekularen Ethylpolymeren**

Process for the production of a catalyst system for the (co)polymerization of ethylene into ultrahighmolecular weight ethylene polymers

Procédé de préparation d'un système catalytique pour la (co)polymèrisation d'éthylène en polymères d'éthylène à poids moléculaire élevé

(84) Benannte Vertragsstaaten:
BE DE ES FR GB IT NL

(30) Priorität: 24.06.1992 DE 4220567

(43) Veröffentlichungstag der Anmeldung:
29.12.1993 Patentblatt 1993/52

(73) Patentinhaber: HOECHST AKTIENGESELLSCHAFT
65926 Frankfurt am Main (DE)

(72) Erfinder:
• Bilda, Dieter, Dr.
W-6230 Frankfurt/Main 80 (DE)
• Böhm, Ludwig, Dr.
W-6234 Hatterheim/Main (DE)

(56) Entgegenhaltungen:
EP-A- 0 103 120        EP-A- 0 198 151
EP-A- 0 257 131

EP 0 575 840 B1

**Beschreibung**

Die Erfindung bezieht sich auf ein Verfahren zur Herstellung von hochaktiven Katalysatoren für die Niederdruckpolymerisation von α-Olefinen zu ultrahochmolekularen Produkten mit einer Molmasse $M_w$ gleich oder größer $1 \times 10^6$ g/mol.

Es ist bekannt, hochmolekulares Polyethylen im Niederdruckverfahren mit ZIEGLER-Katalysatoren zu synthetisieren, indem man Katalysatoren verwendet, die durch Umsetzung von Verbindungen der Elemente der IV. bis VI. Nebengruppe des Periodensystems mit metallorganischen Verbindungen der I. bis III. Hauptgruppe des Periodensystems hergestellt werden. Die Wirksamkeit dieser Katalysatoren läßt sich durch eine Fixierung auf $MgCl_2$-Trägern wesentlich erhöhen.

Neben molekularen Eigenschaften wie Molmasse und Molmassenverteilung spielen morphologische Eigenschaften der hochmolekularen Produkte, wie beispielsweise Korngröße und Korngrößenverteilung, eine entscheidende Rolle für die Verarbeitungseigenschaften und Anwendungsmöglichkeiten.

Bekannt ist ein Katalysator, der durch Umsetzung von wasserfreiem $MgCl_2$ mit Ethanol, Diethylaluminiumchlorid und Titantetrachlorid hergestellt wird und bei Poymerisationstemperaturen von unterhalb 50°C ultrahochmolekulares Polyethylen mit einer intrinsischen Viskosität von 27 dl/g erzeugt (vgl. US 4 933 393).

Die Polymer-Molmasse kann durch Zugabe von Alkohol geregelt werden (vgl. GB 1 518 400, US 4 138 540).

Weiterhin ist ein Katalysator beschrieben worden, bei dem zwei verschiedene Titanverbindungen auf einen organischen Träger aufgebracht werden und mit dem Polyethylen mit einer Molmasse $M_w$ von ca. $2 \times 10^6$ g/mol hergestellt werden kann (vgl. DD 282 013).

Ultrahochmolekulares Polyethylen mit enger Korngrößenverteilung kann auch mit einem Katalysator hergestellt werden, der auf sauerstoffhaltigen anorganischen Mg-Verbindungen basiert (vgl. EP 349 146).

Schließlich wird ein Katalysator zur Herstellung von ultrahochmolekularem Polyethylen beschrieben, der durch Umsetzung von $MgCl_2$ mit einer Alkoxytitan-Verbindung, einem Aluminiumtrihalogenid und einem Tetra-alkoxysilan hergestellt werden kann (vgl. US 4 962 167).

Um den Nachteil der oft zu grobkörnig anfallenden Polymerisate zu beseitigen, werden aufwendige Mahlprozesse für das Polyethylen erforderlich (vgl. US 3 847 888).

Aufgabe der Erfindung war, ein hochaktives Katalysatorsystem zu entwickeln, das in der Lage ist, ultrahochmolekulare Ethylenpolymere mit enger Korngrößenverteilung und einem mittlerem Korndurchmesser im Bereich von 100 bis 200 μm herzustellen.

Diese Aufgabe wird erfindungsgemäß gelöst, indem in der ersten Stufe der Katalysatorherstellung ein Primärfeststoff synthetisiert wird, der das Umsetzungsprodukt einer Dialkylmagnesiumverbindung mit einem Halogenierungsagens und einer Elektronendonatorverbindung ist.

Die Erfindung betrifft somit ein Verfahren zur Herstellung einer Katalysatorkomponente zur zur Polymerisation und Copolymerisation von Ethylen zu ultrahochmolekularen Ethylenpolymeren in Suspension oder in der Gasphase, das dadurch gekennzeichnet ist, daß a) eine Magnesiumverbindung der Formel I

$$R^1 - Mg - R^2, \tag{I}$$

worin $R^1$ und $R^2$ gleich oder verschieden sind und einen $C_1$-$C_{20}$-Alkylrest, einen $C_5$-$C_{20}$-Cycloalkylrest, einen $C_6$-$C_{20}$-Arylrest oder einen $C_2$-$C_{20}$-Alkenylrest bedeuten, in einem inerten Kohlenwasserstoff bei einer Temperatur von 0 bis 100°C mit b) einem Halogenierungsagens der Formel II

$$R^3-X, \tag{II}$$

worin X ein Halogenatom ist und $R^3$ einen $C_1$-$C_{20}$-Alkylrest, einen $C_5$-$C_{20}$-Cycloalkylrest, einen $C_6$-$C_{20}$-Arylrest oder einen $C_2$-$C_{20}$-Alkenylrest bedeutet, zu einem festen Produkt der Formel III

$$(R^1,R^2,R^3)_n - Mg - X_{2-n} \tag{III},$$

worin $R^1$, $R^2$ und $R^3$ die vorgenannte Bedeutung haben und $0,5 \leq n \leq 1,5$ ist, umgesetzt wird und c) mit einer in Kohlenwasserstoffen löslichen Titanverbindung der Formel IV

2

$$Z_m - Ti - Y_{4-m} \qquad \text{(IV)},$$

worin Z und Y gleich oder verschieden sind und ein Halogenatom, eine $C_1$-$C_6$-Alkoxygruppe oder einen $C_1$-$C_{20}$-Carboxyrest bedeuten und m eine Zahl von 0 bis 4 ist, gemeinsam mit einer Perhalogenverbindung der Formel V

$$X_p - C - Q_{4-p} \qquad \text{(V)},$$

worin X ein Halogenatom und Q ein Halogenatom oder ein Wasserstoffatom bedeuten und p 3 oder 4 ist, im Molverhältnis Ti : Mg von 0,01 bis 1 und im Verhältnis Ti : Perhalogenverbindung von 0,1 bis 1 zur Reaktion gebracht wird, wobei d) eine Elektronendonatorverbindung bei einer der Reaktionsstufen a), b) oder c) in einer Menge von 0,01 bis 1 mol je mol Magnesiumverbindung zugegen ist, und e) der erhaltene Feststoff anschließend auf eine mittlere Korngröße von 0,5 bis 5 μm zerkleinert wird.

Zur Herstellung des erfindungsgemäßen Katalysators wird eine Magnesiumverbindung der Formel I

$$R^1 - Mg - R^2 \qquad \text{(I)},$$

in der $R^1$ und $R^2$ gleich oder verschieden sind und einen $C_1$-$C_{20}$-, vorzugsweise $C_2$-$C_8$-Alkylrest, einen $C_5$-$C_{20}$-, vorzugsweise $C_6$-$C_8$-Cycloalkylrest, einen $C_6$-$C_{20}$-, vorzugsweise $C_6$-$C_8$-Arylrest oder einen $C_2$-$C_{20}$-, vorzugsweise $C_2$-$C_8$-Alkenylrest bedeuten, eingesetzt.

Diese Magnesiumverbindung wird umgesetzt mit einem Halogenierungsagens der Formel II

$$R^3 - X \qquad \text{(II)},$$

worin X ein Halogenatom, vorzugsweise Cl, ist und $R^3$ einen $C_1$-$C_{20}$-, vorzugsweise $C_2$-$C_8$-Alkylrest, einen $C_5$-$C_{20}$-, vorzugsweise $C_6$-$C_8$-Cycloalkylrest, einen $C_6$-$C_{20}$-, vorzugsweise $C_6$-$C_8$-Arylrest oder einen $C_2$-$C_{20}$-, vorzugsweise $C_2$-$C_8$-Alkenylrest bedeutet.

Die Umsetzung wird in einem Kohlenwasserstoff mit 4 bis 12 C-Atomen oder einem Gemisch derartiger Kohlenwasserstoffe durchgeführt. Geeignete Kohlenwasserstoffe sind beispielsweise Butane, Hexane, Octane, Decane, Cyclohexane und Benzinfraktionen, die diese Kohlenwasserstoffe enthalten. Die Reaktionstemperatur beträgt 0 bis 100°C.

Man erhält ein festes Produkt der Formel III

$$(R^1, R^2, R^3)_n - Mg - X_{2-n} \qquad \text{(III)},$$

worin $R^1$, $R^2$ und $R^3$ die vorgenannte Bedeutung haben und $0,5 \leq n \leq 1,5$ ist.

Solche Umsetzungsprodukte sind beispielsweise:
n-$C_4H_9$MgCl, i-$C_4H_9$MgCl, $C_6H_5$MgCl, $C_6H_5CH_2$MgCl, $C_3H_7$MgCl, $CH_2 = $CHMgCl oder Gemische dieser Verbindungen..

Für die Lösung der Aufgabe erweist sich der Einsatz einer Elektronendonatorverbindung als notwendig. Geeignete Donatorverbindungen sind neben Estern von Carbonsäuren Ether, Ketone, Amide und Phosphorverbindungen. Typische Ester sind beispielsweise Alkylbenzoate, Alkylphthalate und Alkylanisate.

Vorzugsweise wird die Elektronendonatorverbindung mit dem Träger vor der Fixierung der Titanverbindung mit dem Katalysatorträger (III) umgesetzt.

Es ist jedoch auch möglich, Träger, Donator und Titanverbindung gleichzeitig umzusetzen oder die Titanverbindung als Addukt mit dem Elektronendonator mit dem Träger reagieren zu lassen.

Der Gehalt an Donatorkomponente beträgt 0,01 bis 1, vorzugsweise 0,05 bis 0,5 mol je mol Magnesium. Das Molverhältnis zwischen Elektronendonator und Titanverbindung liegt im Bereich von 0,1 bis 10, vorzugsweise von 0,5 bis 1,5.

Das Addukt der Grignard-Verbindung (III) mit dem Elektronendonator wird mit einer in Kohlenwasserstoffen löslichen Titanverbindung der Formel IV

$$Z_m - Ti - Y_{4-m} \qquad (IV),$$

worin Z und Y gleich oder verschieden sind und ein Halogenatom, vorzugsweise Cl, oder eine $C_1$-$C_6$-, vorzugsweise $C_1$-$C_4$-Alkoxygruppe oder einen $C_1$-$C_{20}$-, vorzugsweise $C_1$-$C_8$-Carboxyrest bedeuten und m eine Zahl von 0 bis 4 ist, gemeinsam mit einer Perhalogenverbindung der Formel V

$$X_p - C - Q_{4-p} \qquad (V),$$

worin X ein Halogenatom, vorzugsweise Cl, und Q ein Halogenatom, vorzugsweise Cl, oder ein Wasserstoffatom bedeuten und p 3 oder 4 ist,
in einem inerten Kohlenwasserstoff bei einer Temperatur von 0 bis 100°C umgesetzt. Das Molverhältnis Ti : Mg liegt im Bereich 0,01 bis 1, vorzugsweise 0,02 bis 0,1 und das Verhältnis Ti : Perhalogenverbindung liegt im Bereich von 0,1 bis 1.

Im Anschluß an die Fixierung des Titans wird der Katalysatorfeststoff (Komponente a) einer Scherbehandlung, beispielsweise durch Mahlen, unterzogen, wodurch die Korngröße der Katalysatorpartikel entsprechend der Dauer der Scherbehandlung auf einen mittleren Durchmesser im Bereich von 0,5 bis 5 µm eingestellt werden kann.

Die Komponente a kann als Suspension direkt mit der Komponente b umgesetzt werden; sie kann jedoch auch zunächst als Feststoff isoliert, gelagert und zur späteren Weiterverwendung wieder suspendiert werden.

Als Komponente b werden vorzugsweise aluminiumorganische Verbindungen verwendet. Als aluminiumorganische Verbindungen eignen sich chlorhaltige aluminiumorganische Verbindungen, die Dialkylaluminiummonochloride der Formel $R^4_2AlCl$ oder Alkylaluminiumsesquichloride der Formel $R^4_3Al_2Cl_3$,
worin $R^4$ ein Alkylrest mit 1 bis 16 Kohlenstoffatomen ist. Als Beispiele seien genannt $(C_2H_5)_2AlCl$, $(iCH_9)_2AlCl$, $(C_2H_5)_3Al_2Cl_3$. Es können auch Gemische dieser Verbindungen eingesetzt werden.

Besonders bevorzugt werden als aluminiumorganische Verbindungen chlorfreie Verbindungen eingesetzt. Hierfür eignen sich einerseits die Umsetzungsprodukte von Aluminiumtrialkylen oder Aluminiumdialkylhydriden mit Kohlenwasserstoffresten mit 1 bis 6 Kohlenstoffatomen, vorzugsweise $Al(iC_4H_9)_3$ oder $Al(iC_4H_9)_2H$, mit 4 bis 20 Kohlenstoffatome enthaltenden Diolefinen, vorzugsweise Isopren. Beispielsweise sei Aluminiumisoprenyl genannt.

Andererseits eigenen sich als solche chlorfreie aluminiumorganische Verbindungen Aluminiumtrialkyle $AlR^4_3$ oder Aluminiumdialkylhydride der Formel $AlR^4_2H$, in denen $R^4$ ein Alkylrest mit 1 bis 16 Kohlenstoffatomen bedeutet.
Beispiele sind $Al(C_2H_5)_3$, $Al(C_2H_5)_2H$, $Al(C_3H_7)_3$, $Al(C_3H_7)_2H$, $Al(iC_4H_9)_3$, $Al(iC_4H_9)_2H$, $Al(C_8H_{17})_3$, $Al(C_{12}H_{25})_3$, $Al(C_2H_5)(C_{12}H_{25})_2$, $Al(iC_4H_9)(C_{12}H_{25})_2$.

Es können auch Mischungen von metallorganischen Verbindungen von Metallen der I., II. oder III. Gruppe des Periodensystems, insbesondere Mischungen verschiedener aluminiumorganischer Verbindungen eingesetzt werden.
Beispielsweise seien folgende Mischungen genannt:
$Al(C_2H_5)_3$ und $Al(iC_4H_9)_3$, $Al(C_2H_5)_2Cl$ und $Al(C_8H_{17})_3$, $Al(C_2H_5)_3$ und $Al(C_8H_{17})_3$, $Al(C_4H_9)_2H$ und $Al(C_8H_{17})_3$, $Al(iC_4H_9)_3$ und $Al(C_8H_{17})_3$, $Al(C_2H_5)_3$ und $Al(C_{12}H_{25})_3$, $Al(iC_4H_9)_3$ und $Al(C_{12}H_{25})_3$, $Al(C_2H_5)_3$ und $Al(C_{16}H_{33})_3$, $Al(C_3H_7)_3$ und $Al(C_{18}H_{37})_2(iC_4H_9)$, $Al(C_2H_5)_3$ und Aluminiumisoprenyl (Umsetzungsprodukt von Isopren mit $Al(iC_4H_9)_3$ oder $Al(iC_4H_9)_2H$).

Das Mischen der Komponente a und der Komponente b kann vor der Polymerisation in einem Rührkessel bei einer Temperatur von -30 bis 150°C, vorzugsweise -10 bis 120°C erfolgen. Es ist auch möglich, die beiden Komponenten direkt im Polymerisationskessel bei einer Temperatur von 20 bis 200°C zu vereinigen. Die Zugabe der Komponente b kann jedoch auch in zwei Schritten erfolgen, indem vor der Polymerisationsreaktion die Komponente a mit einem Teil der Komponente b einer einer Temperatur von -30 bis 150°C voraktiviert wird und die weitere Zugabe der Komponente b in den Polymerisationsreaktor bei einer Temperatur von 20 bis 200°C erfolgt.

Der erfindungsgemäß zu verwendende Polymerisationskatalysator wird zur Polymerisation von 1-Olefinen der Formel $R^5$-CH = $CH_2$, in der $R^5$ ein Wasserstoffatom oder einen Alkylrest mit 1 bis 10 C-Atomen bedeutet, eingesetzt, beispielsweise Ethylen, Propylen, Buten-(1), Hexen-(1), 4-Methylpenten-(1), Octen-(1).

Vorzugsweise wird Ethylen allein oder als Gemisch von mindestens 90 Gew.-%, insbesondere mindestens 95 Gew.-% Ethylen und maximal 10 Gew.-%, insbesondere maximal 5 Gew.-% eines anderen 1-Olefins der obigen Formel polymerisiert.

Die Polymerisation wird in bekannter Weise in Lösung, in Suspension oder in der Gasphase, kontinuierlich oder diskontinuierlich, ein- oder mehrstufig bei einer Temperatur von 20 bis 200°C, vorzugsweise 50 bis 150°C, durchgeführt. Der Druck beträgt 0,5 bis 50 bar. Bevorzugt ist die Polymerisation in dem technisch besonders interessanten Druckbereich von 5 bis 30 bar.

Dabei wird die Komponente a in einer Konzentration, bezogen auf Übergangsmetall, von 0,0001 bis 1, vorzugs-

EP 0 575 840 B1

weise 0,0005 bis 0,1 mmol Ubergangsmetall pro $dm^3$ Dispergiermittel angewendet. Die metallorganische Verbindung wird in einer Konzentration von 0,1 bis 5 mmol, vorzugsweise 0,5 bis 4 mmol pro $dm^3$ Dispergiermittel verwendet. Prinzipiell sind aber auch höhere Konzentrationen möglich.

Die Suspensionspolymerisation wird in einem für das Ziegler-Niederdruckverfahren gebräuchlichen inerten Dispergiermittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin können Benzin- bzw. hydrierte Dieselölfraktionen, die sorgfältig von Sauerstoff, Schwefelverbindungen und Feuchtigkeit befreit worden sind, benutzt werden.

Die Gasphasenpolymerisation kann direkt oder nach Vorpolymerisation des Katalysators in einem Suspensionsverfahren durchgeführt werden.

Die Molmasse des Polymerisats wird in bekannter Weise geregelt, vorzugsweise wird dazu Wasserstoff verwendet.

Ein Vorteil des erfindungsgemäßen Verfahrens besteht darin, daß mittels der erfindungsgemäß hergestellten Katalysatorkomponente a Polymere mit einen mittleren Korndurchmesser von 50 bis 200 μm hergestellt werden können und daß dieser mittlere Korndurchmesser durch den Katalysatorpartikeldurchmesser und durch die Katalysatorproduktivität eingestellt werden kann.

Außerdem kann ultrahochmolekulares Polyethylen mit einer Viskositätszahl von größer als 2000 $cm^3$/g hergestellt werden.

Die folgenden Beispiele erläutern die Erfindung.
Es bedeuten:

| KA | Katalysatorproduktivität | [kg PE/mmol Ti] |
|---|---|---|
| $KZA_{red}$ | Reduzierte Katalysator-Zeit-Ausbeute | [kg PE/mmol Ti*h*bar] |
| $d_{50}$ | Mittlere Teilchengröße | [μm] |
| | (erhalten durch Rüttelsiebfraktionierung) | |
| SD | Polymerschüttdichte | [g/$dm^3$] |
| | (gemessen nach DIN 53 468) | |
| VZ | Viskositätszahl | [$cm^3$/g] |
| | (gemessen nach DIN 53 728) | |

Beispiel 1

Zu einer Lösung von 0,05 mol n-Butyl-s-butylmagnesium (Fa.LITHCO) in 50 $cm^3$ einer Benzinfraktion wurden unter Inertbedingungen innerhalb einer Stunde bei 80°C 0,05 mol t-Butylchlorid in 50 $cm^3$ der Benzinfraktion getropft. Es bildete sich ein weißer, feindisperser Feststoff. Man rührte den Ansatz noch eine halbe Stunde und erhielt die Suspension $a_1$.
Anschließend wurden 0,005 mol Diisobutylphthalat, gelöst in 20 $cm^3$ der Benzinfraktion, als Elektronendonor zur Suspension $a_1$ getropft und das Gemisch eine halbe Stunde bei 80°C gerührt. Man erhielt die Suspension $a_2$. Titantetrachlorid (0,005 mol) und Tetrachlormethan (0,01 mol) wurden gemeinsam in 50 $cm^3$ der Benzinfraktion gelöst und innerhalb einer Stunde bei einer Reaktionstemperatur von 80°C zur Suspension $a_2$ getropft ($\Rightarrow$ Suspension $a_3$) Die dunkelbraune Suspension wurde noch 2 h bei 80°C gerührt und nach dem Abkühlen auf Raumtemperatur 5 Stunden mit Glaskugeln, die einen Durchmesser von 4 mm aufwiesen, im Reaktionskolben gemahlen.
Der Titangehalt der Katalysatorsuspension betrug 27,5 mmol/$dm^3$. Der Anteil an löslichen Titanverbindungen betrug 2,2 Gew.-% des Gesamttitans.
Die Katalysatorteilchen wiesen nach lichtmikroskopischen Messungen einen mittleren Durchmesser von 2,1 μm auf.

Die Polymerisation von Ethylen wurde isobar in einem 1,5 $dm^3$-Laborautoklaven in 800 $cm^3$ einer Benzinfraktion bei einer Rührerdrehzahl von 750 Upm bei einem Ethylenpartialdruck von 4 bar während eines Zeitraums von 2 Stunden durchgeführt. Die Polymerisationstemperatur betrug 80°C. Als Cokatalysator wurde 1 mmol Triisobutylaluminium eingesetzt.
Die Suspension der Katalysatorkomponente a wurde auf eine Konzentration von 1 mmol Ti/$dm^3$ verdünnt. Von dieser verdünnten Suspension wurde 1 $cm^3$ zur Polymerisation verwendet.
Die Reaktion wurde durch Entspannen und Abkühlen beendet und das Polymere durch Filtration und Trocknung vom Dispergiermittel abgetrennt. Es wurden 164 g Polyethylen entsprechend einer KA von 164 kg PE/mmol Ti und einer $KZA_{red}$ von 20,5 kg PE/mmol Ti*h*bar erhalten.
Die VZ betrug 2750 $cm^3$/g, das Produkt hatte eine Schüttdichte von 310 g/$dm^3$ und einen $d_{50}$ von 143 μm.

5

Beispiel 2

Zu einer Lösung von 0,05 mol n-Butyl-s-butylmagnesium in 50 cm$^3$ einer Benzinfraktion wurden unter Inertbedingungen innerhalb einer Stunde bei 80°C 0,05 mol t-Butylchlorid in 50 cm$^3$ der Benzinfraktion getropft.

Es bildete sich ein weißer, feindisperser Feststoff. Man rührte den Ansatz noch eine halbe Stunde und erhielt die Suspension $a_1$.

Anschließend wurden 0,005 mol Benzoesäureethylester als Elektronendonator in 20 cm$^3$ der Benzinfraktion zur Suspension $a_1$ getropft und das Gemisch eine halbe Stunde bei 80°C gerührt (Suspension $a_2$).

Titantetrachlorid (0,005 mol) und Tetrachlormethan (0,01 mol) wurden gemeinsam in 50 cm$^3$ der Benzinfraktion gelöst und in einer Stunde bei einer Reaktionstemperatur von 80°C zur Suspension $a_2$ getropft. (Suspension $a_3$) Die dunkelbraune Suspension wurde noch 2 h bei 80°C gehalten. Nach dem Abkühlen auf Raumtemperatur wurde sie 5 h mit Glaskugeln, die einen Durchmesser von 4 mm aufwiesen, im Reaktionsgefäß gemahlen.

Der Titangehalt der Katalysatorsuspension betrug 26,8 mmol/dm$^3$. Der Anteil an löslichen Titanverbindungen betrug 2,9 Gew.-% des Gesamttitans.

Die Katalysatorteilchen wiesen nach lichtmikroskopischen Messungen einen mittleren Durchmesser von 2,4 μm auf.

Die Polymerisation wurde wie in Beispiel 1 beschrieben durchgeführt.

Es wurden 142 g Polyethylen entsprechend einer KA von 142 kg PE/mmol Ti bzw. einer KZA$_{red}$ von 17,8 kg PE/mmol Ti*h*bar erhalten.

Die VZ betrug 2580 cm$^3$/g, das Produkt wies eine Schüttdichte von 302 g/dm$^3$ und einen $d_{50}$ von 129 μm auf.

Beispiel 3

Die Herstellung der Katalysatorkomponente wurdwie im Beispiel 1 durchgeführt, mit der Ausnahme, daß anstelle des Tetrachlormethans die gleiche Menge Chloroform eingesetzt wurde.

Die Polymerisation wurde wie in Beispiel 1 beschrieben durchgeführt.

Man erhielt 168 g Polyethylen entsprechend einer KA von 168 kg PE/mmol Ti bzw. einer KZA$_{red}$ von 21,0 kg PE/mmol Ti*h*bar erhalten.

Die VZ betrug 2720 cm$^3$/g, das Produkt wies eine Schüttdichte von 315 g/dm$^3$ und einen $d_{50}$ von 141 μm auf.

Beispiel 4

Die Herstellung der Katalysatorkomponente a wurde wie im Beispiel 1 durchgeführt, mit der Ausnahme, daß anstelle des Titantetrachlorids die gleiche Menge $TiCl_3(OC_3H_7)$ eingesetzt wurde.

Die Polymerisation wurde wie in Beispiel 1 beschrieben durchgeführt.

118 g Polyethylen entsprechend einer KA von 118 kg PE/mmol Ti bzw. einer KZA$_{red}$ von 14,8 kg PE/mmol Ti*h*bar wurden erhalten.

Die VZ betrug 2840 cm$^3$/g, das Produkt wies eine Schüttdichte von 298 g/dm$^3$ und einen $d_{50}$ von 125 μm auf.

Beispiel 5

Die Herstellung der Katalysatorkomponente wurde wie im Beispiel 1 durchgeführt, mit dem Unterschied, daß anstelle des n-Butyl-s-butylmagnesiums die gleiche Menge n-Butyl-n-octylmagnesium (BOMAG-A der Fa.Schering) eingesetzt wurde.

Die Polymerisation wurde wie in Beispiel 1 beschrieben durchgeführt.

Es wurden 176 g Polyethylen entsprechend einer KA von 176 kg PE/mmol Ti bzw. einer KZA$_{red}$ von 22,0 kg PE/mmol Ti*h*bar erhalten.

Das Produkt hatte eine VZ von 2670 cm$^3$/g, eine Schüttdichte von 323 g/dm$^3$ und einen $d_{50}$ von 152 μm.

Beispiel 6

Die Herstellung der Katalysatorkomponente wurde wie im Beispiel 5 durchgeführt, mit dem Unterschied, daß die Katalysatorsuspension nach dem Mahlvorgang 2 mal mit 100 cm$^3$ der Benzinfraktion gewaschen wurde.

Der Titangehalt der Katalysatorsuspension betrug 23,7 mmol/dm$^3$. In der Restlösung konnten keine löslichen Titanverbindungen mehr nachgewiesen werden.

Die Polymerisation wurde wie in Beispiel 1 beschrieben durchgeführt.

Man erhielt 153 g Polyethylen entsprechend einer KA von 153 kg PE/mmol Ti bzw. einer KZA$_{red}$ von 19,1 kg PE/mmol Ti*h*bar.

Die VZ betrug 2810 cm$^3$/g, das Produkt wies eine Schüttdichte von 295 g/dm$^3$ und einen $d_{50}$ von 148 μm auf.

Beispiel 7

Die Herstellung der Katalysatorkomponente a wurde wie im Beispiel 5 durchgeführt.

Die Polymerisation wurde wie in Beispiel 1 beschrieben durchgeführt, mit dem Unterschied, daß die Polymerisationstemperatur auf 70°C herabgesetzt wurde. 117 g Polyethylen entsprechend einer KA von 117 kg PE/mmol Ti bzw. einer $KZA_{red}$ von 14,6 kg PE/mmol Ti*h*bar wurden erhalten.

Das Produkt wies eine VZ von 3110 $cm^3$/g, eine Schüttdichte von 318 g/$dm^3$ und einen $d_{50}$ von 127 μm auf.

Beispiel 8

Die Herstellung der Katalysatorkomponente erfolgte wie im Beispiel 5.

Die Polymerisation wurde wie in Beispiel 1 beschrieben durchgeführt, mit dem Unterschied, daß anstelle von Triisobutylaluminium die gleiche Menge (1 mmol) Triethylaluminium als Cokatalysator verwendet wurde.

Man erhielt 152 g Polyethylen entsprechend einer KA von 152 kg PE/mmol Ti bzw. einer $KZA_{red}$ von 19,0 kg PE/mmol Ti*h*bar.

Die VZ betrug 2180 $cm^3$/g, das Produkt wies eine Schüttdichte von 321 g/$dm^3$ und einen $d_{50}$ von 148 μm auf.

Beispiel 9

Zu einer Lösung von 0,5 mol n-Butyl-n-octylmagnesium (BOMAG-A der Fa.Schering; 20 %ig in Heptan) wurden unter Inertbedingungen innerhalb einer Stunde bei 80°C 0,5 mol t-Butylchlorid in 100 $cm^3$ einer Benzinfraktion getropft. Es bildete sich ein weißer, feindisperser Feststoff. Der Ansatz wurde noch eine Stunde bei 80°C gerührt (Suspension $a_1$.)

Anschließend wurden 0,03 mol Diisobutylphthalat als Elektronendonator in 50 $cm^3$ der Benzinfraktion zur Suspension $a_1$ getropft und das Gemisch eine Stunde bei 80°C gerührt (Suspension $a_2$).

Titantetrachlorid (0,05 mol) und Tetrachlormethan (0,1 mol) wurden gemeinsam in 100 $cm^3$ der Benzinfraktion gelöst und in einer Stunde bei einer Reaktionstemperatur von 80°C zur Suspension $a_2$ getropft (Suspension $a_3$). Die dunkelbraune Suspension wurde noch 2 h bei 80°C gerührt und nach Abkühlen auf Raumtemperatur 10 Stunden mit Glaskugeln, die einen Durchmesser von 4 mm aufwiesen, gemahlen. Der Titangehalt der Katalysatorsuspension betrug 58,6 mmol/$dm^3$. Der Anteil an löslichen Titanverbindungen betrug 4,9 Gew.-% des Gesamttitans.

Die Katalysatorteilchen wiesen einen mittleren Durchmesser von 1,5 μm auf.

Die Polymerisation von Ethylen wurde in einem 150 $dm^3$-Kessel in 100 $dm^3$ einer Benzinfraktion mit 1,2 $cm^3$ der vorgenannten Katalysatorkomponente a, entsprechend 0,07 mmol Titan, mit 0,15 mmol Triisobutylaluminium als Cokatalysator durchgeführt.

Die Ethyleneingasmenge betrug 5,0 kg/h. Die Polymerisationstemperatur war 80°C. Die Reaktion wurde nach Erreichen eines Gesamtdruckes von 9,0 bar durch Entspannen und Abkühlen beendet und das Polymere durch Filtration und Trocknung vom Dispergiermittel abgetrennt.

Die Polymerisationszeit betrug 3,75 Stunden. Man erhielt 18,5 kg Polyethylen entsprechend einer KA von 264 kg PE/mmol Ti.

Das Produkt hatte eine VZ von 2650 $cm^3$/g, eine Schüttdichte von 296 g/$dm^3$ und einen $d_{50}$ von 147 μm.

Beispiel 10

Die Herstellung der Katalysatorkomponente a geschah wie im Beispiel 5.

In einem 2-$dm^3$-Stahlautoklaven mit polierten Wandflächen wurde eine Gasphasenpolymerisation von Ethylen durchgeführt. Das Wirbelbett wurde mit Hilfe eines wandgängigen Doppelwendelrührers bei einer Vorlage von 10 g Polyethylenpulver als Saatbett mechanisch erzeugt. Über eine Druckbürette wurden zunächst der Cokatalysator (2 mmol Triisobutylaluminium) und danach 2 $cm^3$ der Katalysatorsuspension (2 mmol Ti) in den Autoklaven dosiert. Nach mehrmaligem Aufdrücken von Argon und Evakuieren wurde die Polymerisation bei 10 bar Ethylenpartialdruck bei einer Temperatur von 80 °C über 2 Stunden durchgeführt und durch Entspannen des Autoklaven beendet.

241 g Polyethylen entsprechend einer KA von 120 kg PE/mmol Ti bzw. einer $KZA_{red}$ von 6,0 kg PE/mmol Ti*h*bar wurden erhalten.

Die VZ betrug 2630 $cm^3$/g, das Produkt hatte eine Schüttdichte von 348 g/$dm^3$ und einen $d_{50}$ von 104 μm.

**Patentansprüche**

1.  Verfahren zur Herstellung einer Katalysatorkomponente zur Polymerisation und Copolymerisation von Ethylen zu ultrahochmolekularen Ethylenpolymeren in Suspension oder in der Gasphase,
dadurch gekennzeichnet, daß

a) eine Magnesiumverbindung der Formel I

$$R^1 - Mg - R^2,\qquad\text{(II)}$$

worin $R^1$ und $R^2$ gleich oder verschieden sind und einen $C_1$-$C_{20}$-Alkylrest, einen $C_5$-$C_{20}$-Cycloalkylrest, einen $C_6$-$C_{20}$-Arylrest oder einen $C_2$-$C_{20}$-Alkenylrest bedeuten, in einem inerten Kohlenwasserstoff bei einer Temperatur von 0 bis 100°C mit

b) einem Halogenierungsagens der Formel II

$$R^3 - X,\qquad\text{(II)}$$

worin X ein Halogenatom ist und $R^3$ einen $C_1$-$C_{20}$-Alkylrest, einen $C_5$-$C_{20}$-Cycloalkylrest, einen $C_6$-$C_{20}$-Arylrest oder einen $C_2$-$C_{20}$-Alkenylrest bedeutet, zu einem festen Produkt der Formel III

$$(R^1,R^2,R^3)_n - Mg - X_{2-n}\qquad\text{(III)},$$

worin $R^1$, $R^2$ und $R^3$ die vorgenannte Bedeutung haben und $0,5 \leqq n \leqq 1,5$ ist, umgesetzt wird und

c) mit einer in Kohlenwasserstoffen löslichen Titanverbindung der Formel IV

$$Z_m - Ti - Y_{4-m}\qquad\text{(IV)},$$

worin Z und Y gleich oder verschieden sind und ein Halogenatom, eine $C_1$-$C_6$-Alkoxygruppe oder einen $C_1$-$C_{20}$-Carboxyrest bedeuten und m eine Zahl von 0 bis 4 ist, gemeinsam mit einer Perhalogenverbindung der Formel V

$$X_p - C - Q_{4-p}\qquad\text{(V)},$$

worin X ein Halogenatom und Q ein Halogenatom oder ein Wasserstoffatom bedeuten und p 3 oder 4 ist, im Molverhältnis Ti : Mg von 0,01 bis 1 und im Verhältnis Ti : Perhalogenverbindung von 0,1 bis 1 zur Reaktion gebracht wird, wobei

d) eine Elektronendonatorverbindung bei einer der Reaktionsstufen a), b) oder c) in einer Menge von 0,01 bis 1 mol je mol Magnesiumverbindung zugegen ist, und

e) der erhaltene Feststoff anschließend auf eine mittlere Korngröße von 0,5 bis 5 μm zerkleinert wird.

2. Verfahren nach Anspruch 1, dadurch gekennzeichnet, daß als Elektronendonatorverbindungen Ester von Carbonsäuren, Ether, Ketone, Amide oder Phosphorverbindungen eingesetzt werden.

3. Verfahren nach Anspruch 1, dadurch gekennzeichnet, daß das Molverhältnis zwischen Elektronendonator und Titanverbindung im Bereich von 0,1 bis 10 liegt.

4. Katalysatorkomponente, hergestellt nach dem Verfahren gemäß Anspruch 1.

5. Verwendung der nach Anspruch 1 hergestellten Katalysatorkomponente zum Polymerisieren und Copolymerisieren von Ethylen zu ultrahochmolekularen Ethylenpolymeren.

**6.** Verfahren zur Herstellung von ultrahochmolekularen Ethylenpolymeren durch Polymerisation und Copolymerisation von Ethylen in Suspension oder in der Gasphase, in Gegenwart eines Mischkatalysators bestehend aus einer Übergangsmetallverbindung (Komponente a) und einer aluminiumorganischen Verbindung (Komponente b), dadurch gekennzeichnet, daß die Komponente a nach dem Verfahren gemäß Anspruch 1 hergestellt wurde.

## Claims

**1.** A process for the preparation a catalyst component for the polymerization and copolymerization of ethylene to give ultrahigh-molecular-weight ethylene polymers in suspension or in the gas phase, which comprises

a) reacting a magnesium compound of the formula I

$$R^1\text{-Mg-}R^2, \qquad (I)$$

in which $R^1$ and $R^2$ are identical or different and are a $C_1$-$C_{20}$-alkyl radical, a $C_5$-$C_{20}$-cycloalkyl radical, a $C_5$-$C_{20}$-aryl radical or a $C_2$-$C_{20}$-alkenyl radical, in an inert hydrocarbon at a temperature of from 0 to 100°C with
b) a halogenating agent of the formula II

$$R^3\text{-X}, \qquad (II)$$

in which X is a halogen atom and $R^3$ is a $C_1$-$C_{20}$-alkyl radical, a $C_5$-$C_{20}$-cycloalkyl radical, a $C_6$-$C_{20}$-aryl radical or a $C_2$-$C_{20}$-alkenyl radical,
to give a solid product of the formula III

$$(R^1,R^2,R^3)_n\text{-Mg-}X_{2\text{-}n} \qquad (III),$$

in which $R^1$, $R^2$ and $R^3$ are as defined above, and $0.5 \leq n \leq 1.5$, and
c) with a hydrocarbon-soluble titanium compound of the formula IV

$$Z_m\text{-Ti-}Y_{4\text{-}m} \qquad (IV),$$

in which Z and Y are identical or different and are a halogen atom, a $C_1$-$C_6$-alkoxy group or a $C_1$-$C_{20}$-carboxyl radical, and m is a number from 0 to 4, together with a perhalogen compound of the formula V

$$X_p\text{-C-}Q_{4\text{-}p} \qquad (V),$$

in which X is a halogen atom, Q is a halogen atom or a hydrogen atom and p is 3 or 4, in a Ti : Mg molar ratio of from 0.01 to 1 and in a Ti: perhalogen compound ratio of from 0.1 to 1, where
d) an electron-donor compound is present in one of reaction steps a), b) and c) in an amount of from 0.01 to 1 mol per mol of magnesium compound, and e) the resultant solid is subsequently comminuted to a mean particle size of from 0.5 to 5 $\mu$m.

**2.** The process as claimed in claim 1, wherein the electron-donor compound employed is an ester of a carboxylic acid, an ether, a ketone, an amide or a phosphorus compound.

**3.** The process as claimed in claim 1, wherein the molar ratio between the electron donor and the titanium compound is in the range from 0.1 to 10.

**4.** A catalyst component prepared by the process as claimed in claim 1.

**5.** A method of using a catalyst component prepared as claimed in claim 1 for polymerising and copolymerizing ethylene to give ultrahigh-molecular-weight ethylene polymers.

6. A process for the preparation of ultrahigh-molecular-weight ethylene polymers by polymerization and copolymerization of ethylene in suspension or in the gas phase, in the presence of a cocatalyst comprising a transition-metal compound (component a) and an organoaluminum compound (component b), which comprises preparing component a by the process as claimed in claim 1.

## Revendications

1. Procédé pour préparer un constituant catalyseur pour la polymérisation et la copolymérisation de l'éthylène, pour donner des polymères de l'éthylène à poids moléculaire extrêmement élevé en suspension ou en phase gazeuse, caractérisé en ce qu'on fait réagir

   a) un composé du magnésium de formule I

$$R^1 - Mg - R^2 \qquad (I)$$

dans laquelle $R^1$ et $R^2$ sont identiques ou différents et représentent chacun un radical alkyle en $C_1$-$C_{20}$, un radical cycloalkyle en $C_5$-$C_{20}$, un radical aryle en $C_6$-$C_{20}$ ou un radical alcényle en $C_6$-$C_{20}$, dans un hydrocarbure inerte à une température de 0 à 100°C, avec
b) un agent d'halogénation de formule II

$$R^3 - X \qquad (II)$$

dans laquelle X est un atome d'halogène et $R^3$ est un radical alkyle en $C_1$-$C_{20}$, un radical cycloalkyle en $C_5$-$C_{20}$, un radical aryle en $C_6$-$C_{20}$ ou un radical alcényle en $C_2$-$C_{20}$, pour donner un produit solide de formule III

$$(R^1,R^2,R^3)_n - Mg - X_{2-n} \qquad (III)$$

dans laquelle $R^1$, $R^2$ et $R^3$ ont les significations données ci-dessus, et $0,5 \geq n \geq 1,5$, et on le fait réagir avec
c) un composé du titane, soluble dans les hydrocarbures, de formule IV

$$Z_m - Ti - Y_{4-m} \qquad (IV)$$

dans laquelle Z et Y sont identiques ou différents et représentent chacun un atome d'halogène, un groupe alcoxy en $C_1$-$C_6$ ou un résidu carboxy en $C_1$-$C_{20}$, et m est un nombre de 0 à 4, en même temps qu'un composé perhalogéné de formule V

$$X_p - C - Q_{4-p} \qquad (V)$$

dans laquelle X est un atome d'halogène et Q est un atome d'halogène ou un atome d'hydrogène, et p vaut 3 ou 4, selon un rapport en moles Ti:Mg de 0,01 à 1 et selon un rapport Ti:composé perhalogéné de 0,1 à 1, en présence
d) d'un composé donneur d'électrons, dans l'une des étapes de réaction a), b) ou c), en une quantité de 0,01 à 0,1 mole par mole du composé du magnésium, et
e) le solide obtenu est ensuite broyé à une granulométrie moyenne de 0,5 à 5 μm.

2. Procédé selon la revendication 1, caractérisé en ce qu'on utilise comme composés donneurs d'électrons des esters d'acides carboxyliques, des éthers, des cétones, des amides ou des composés du phosphore.

3. Procédé selon la revendication 1, caractérisé en ce que le rapport en moles du donneur d'électrons au composé du titane est compris dans l'intervalle de 0,1 à 10.

4. Constituant catalyseur préparé par le procédé selon la revendication 1.

5. Utilisation du constituant catalyseur préparé selon la revendication 1 pour polymériser et copolymériser l'éthylène en des polymères de l'éthylène à poids moléculaire extrêment élevé.

6. Procédé de préparation de polymères de l'éthylène à poids moléculaire extrêmement élevé, par polymérisation et copolymérisation d'éthylène en suspension ou en phase gazeuse, en présence d'un catalyseur mixte constitué d'un composé d'un métal de transition (constituant a) et d'un composé organique de l'aluminium (constituant b), caractérisé en ce que le constituant a a été préparé par le procédé selon la revendication 1.